# EUROPEAN PATENT APPLICATION

(11) **EP 1 629 870 A1**
(43) Date of publication of application: **01.03.2006**
(21) Application number: 04735368.5
(22) Date of filing: 28.05.2004
(51) Int. Cl.: A63F 13/00, G06F 3/12, G06T 11/80, H04N 5/76

(54) **RECORDING MEDIUM ON WHICH PROGRAM IS RECORDED, GAME MACHINE, GAME SYSTEM, AND GAME MACHINE CONTROL METHOD**

(30) Priority: 29.05.2003 JP 2003153276
(71) Applicant: SONY CORPORATION, Tokyo 141-0001 (JP)
(72) Inventor: MURAKAMI, Hiroyuki c/o SONY CORPORATION, Shinagawa-ku Tokyo (JP)
(74) Representative: Thévenet, Jean-Bruno
(86) International application number: PCT/JP2004/007783
(87) International publication number: WO 2004/105904

(57) **Abstract**

A TV game system is composed of a TV game machine, which includes a TV game program recording medium 4, to which a TV game program and a print screen creation program are recorded, a read means (disc drive 12), and a control means (processor 11), and a printer 6. The control means causes a game to be played according to the TV game program as well as places a game screen in a still state while the game is being played by the manipulation of the controller 2 converts the game screen into image-editable image data as well as permits an arbitrary region in the game screen to be selected the manipulation of the controller 2, saves, when a region in the game screen is specified, the image data of the specified region in the memory, converts the image data into print data to a standard size card, and output the print data to the printer 6.

## Description

### Technical Field

The present invention relates to a recording medium having a program recorded thereto in order to simply print a desired image in a game on a standard size card such as a postcard, greeting card, name card, and the like, and to a game machine for executing the program, a game system, and a game machine control method.

### Background Art

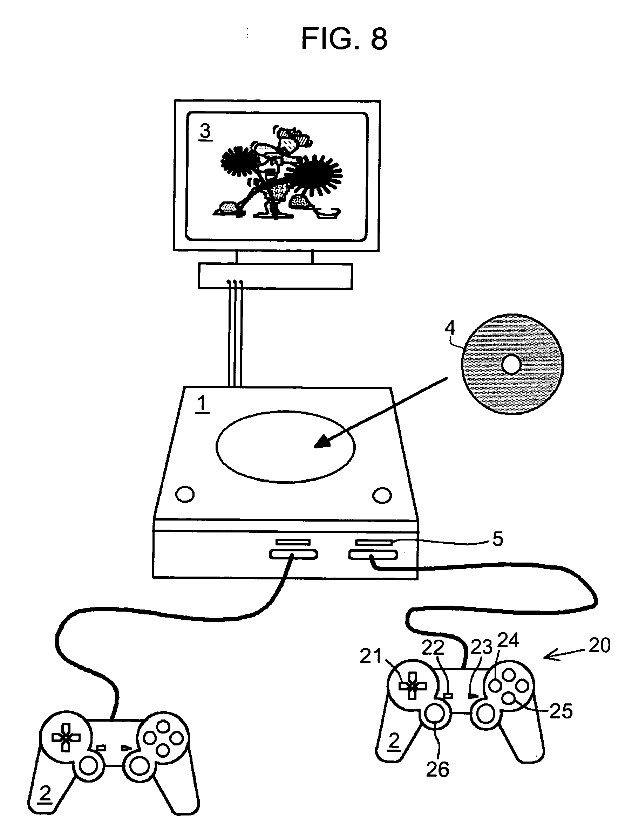

In general, a home-use game machine is composed of a game machine main body 1, and a controller 2 connected to the game machine main body 1, and a monitor 3 as shown in Fig. 8. Although the controller 2 has a different shape and a different key layout depending on a type of a machine, there becomes widespread a controller having a cross key 21, a start key 22, a select key 23, a plurality of button keys 20 such as an A button 24, a B button 25, and the like, which are depressed as necessary, and a stick-shaped key 26 which can be tilted in an arbitrary direction. Further, the controller 2 may include a vibration mechanism as a means for a player to enjoy real-time feeling on a game. Further, a display of a home-use television is ordinarily used as the monitor 3.

A recording medium 4, to which a TV game program is recorded (so-called game software CD), is mounted on the game machine main body 1, the TV game program is read out from the recording medium 4, and a game screen is displayed on the monitor 3. The player plays on the game screen using the controller 2. To stop the game, game data is recorded to a memory card 5 as necessary, and when the game restarted, the game data is called from the memory card 5.

There is a request to obtain a printed matter when a stage of a game is cleared, a high score is gotten, and a new character appears at a turning point of a game to attest these facts. To satisfy this request, it is recently proposed to connect a printer to a game machine main body and to output a record and a character, which are variable to a player, from the game machine main body to the printer as disclosed in Japanese Unexamined Patent Application Publication Nos. 2001-259218, 2003-62342, and the like, and it is further proposed to print the name of the player and the like when the record and the character are printed.

However, conventional game machines can only print a record of a specific stage predetermined in a program and a specific character appearing in a specific scene and cannot print an arbitrary image in a game screen as needed while a game is being played. Accordingly, an image and the like of a favorite character of a player cannot be printed when it takes an attitude of his or her type.

### Disclosure of the Invention

Accordingly, an object of the present invention is to permit a player to easily print a desired image in a game screen of a game machine by manipulating a controller and further to permit the player to input simple letters by manipulating the controller so that the player can easily use the printed matter as a postcard, a greeting card, a name card, and the like.

The present invention provides a computer-readable recording medium having a program recorded thereto, the program causing a computer disposed to a game machine to execute a function for playing a game, a function for placing a game screen in a still state while a game is being played by manipulating a controller, a function for converting the game screen into image-editable image data, a function for selecting an arbitrary region in the game screen by the actuation of the controller, a function for saving, when a region in the game screen is specified, the image data of the specified region in a memory of the game machine, a function for converting the image data into standard size print data, and a function for outputting the print data to a printer connected to the game machine.

The present invention provides a game system, which comprises a computer-readable recording medium having a program recorded thereto, the program causing a computer to execute a function for playing a game, a function for placing a game screen in a still state while a game is being played by the manipulation of a controller, a function for converting the game screen into image-editable image data, a function for selecting an arbitrary region in the game screen by actuating the controller, a function for saving, when the region in the first specification is specified, the image data of the specified region in a memory of the game machine, a function for converting the image data into standard size print data, and a function for outputting the print data to a printer connected to the game machine, a read means for reading the program from the computer-readable recording medium, a game machine comprising a computer for executing the program and the memory, and a printer for printing print data output from the game machine.

Further, the present invention provides a game machine control method which comprises placing a game screen in a still status in a game machine while a game is being played by the manipulation of a controller, converting the game screen into image-editable image data as well as selecting an arbitrary region in the game screen by the manipulation of the controller, saving, when a region in the game screen is specified by the manipulation of the controller, the image data of the specified region in a memory of the game machine, and converting the image data into print data to a standard size card and outputting the print data to a printer connected to the game machine.

### Brief Description of Drawings

Fig. 1 is a configurational view of a TV game system of an embodiment.
Fig. 2 is a block diagram of a game machine main body.
Fig. 3 is a flowchart showing a procedure of a program executed by a controller.
Fig. 4 is a view explaining a letter board displayed on a monitor when letter information is input by the controller.
Fig. 5 is a view explaining a screen on which an address and the like are called from a memory.
Figs. 6A and 6B shows examples of a printed matter, wherein Fig. 6A show an example of the front surface of a postcard, and Fig. 6B shows an example the back surface thereof.
Fig. 7 shows an example of an printed matter.
Fig. 8 is a system configurational view of a conventional ordinary home-use TV game machine.

### Best Mode for Carrying Out the Invention

The present invention will be explained in detail with reference to the figures. Note that the same reference numerals denote the same or similar components.

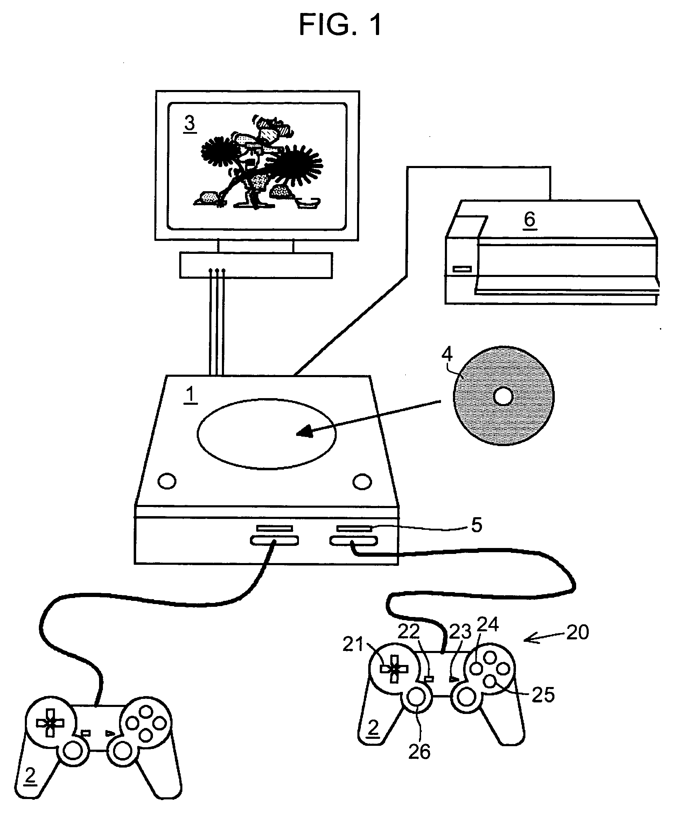

Fig. 1 is a configurational view of a TV game system of an embodiment of the present invention. In the TV game system, a printer 6 is connected to a TV game machine composed of a game machine main body 1 and a controller 2 and a monitor 3 connected to the game machine main body 1. In the TV game system, a CD-ROM, a DVD, and the like, to which a TV game program and a print screen creation program are recorded, are used as a TV game program recording medium 4 which is read by the game machine main body 1.

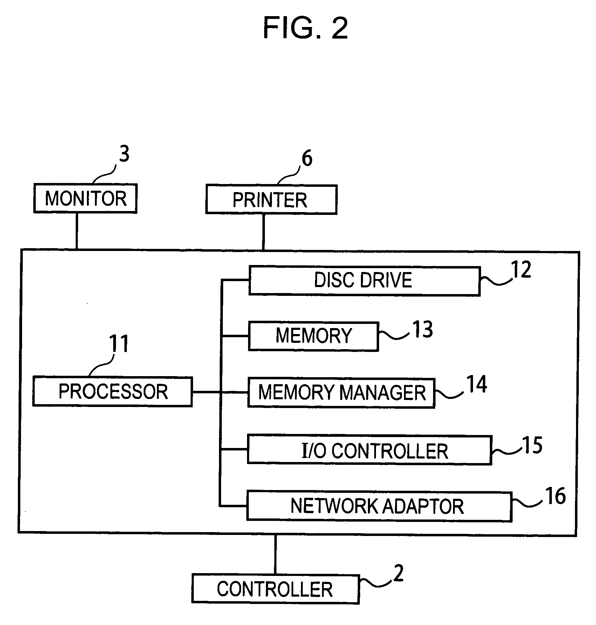

As shown in a block diagram of a hardware arrangement of Fig. 2, the game machine main body 1 includes hardware such as a processor 11 constituting a control means, a disc drive 12 constituting a read-out means for reading a program from the recording medium 4, a memory 13, a memory manager 14, an I/O controller 15 for detecting a key manipulation of the controller 2 and transmitting it to the processor 11, a network adaptor 16, and the like. In the game machine main body 1, an image display control function, an image processing function, a sound function, a printer control function, a network management function, and the like are realized by the hardware according to the TV game program and the print screen creation program read from the disc drive 12, thereby it is possible to play a TV game as well as to create a print screen using an image in a game screen and to print the image.

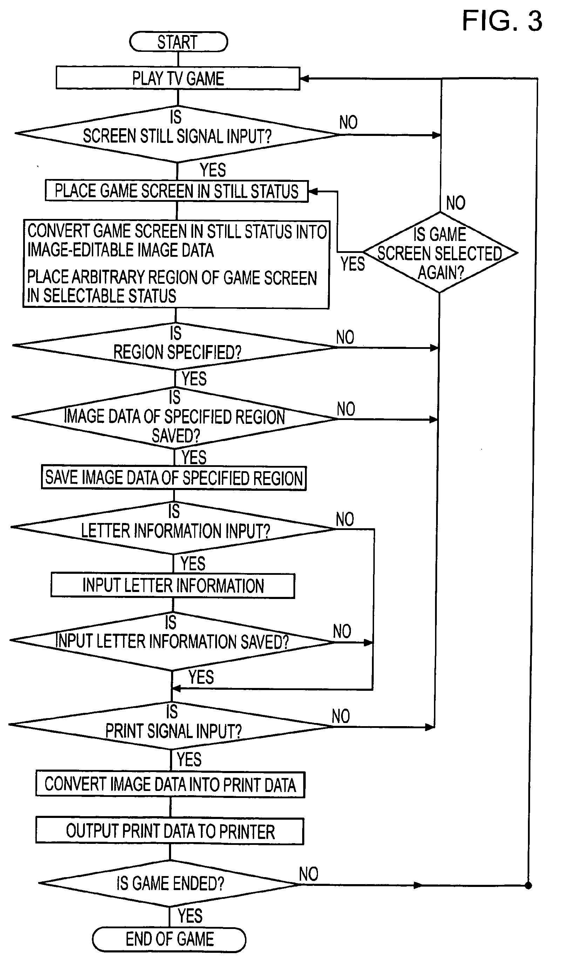

In this case, the processor 11 functions according to, for example, a flowchart shown in Fig. 3 by executing the TV game program and the print screen creation program recorded in the TV game program recording medium 4.

First, when the player presses a start key of the controller 2 and a start signal is transmitted to the processor 11, the processor 11 begins to execute the TV game program.

When an screen still signal is input to the processor 11 by the manipulation of a specific key of the controller 2 while the TV game is being played, the processor 11 places a game screen in a still status. In this case, the print screen creation program specifies a key, which is manipulated to issue the image still signal, from the start key 22, the select key 23, the button A 24, the B button 25, and the like in the controller 2. Further, when the game screen is placed in the still status, the overall game screen displayed on the monitor 3 may be placed in the still status. However, for example, the game screen may be divided into two portions, a still screen may be displayed in one of the portions at the time the screen still signal is input, and the game screen may be continuously displayed in the other portion.

The processor 11 converts the game screen into image-editable image data such as a copy, a paste, and the like as well as causes an arbitrary region in the game screen to be selected by the manipulation of the controller 2.

When a region in the game screen is specified by manipulating the cross key 21, the select key 23, and the like of the controller 2 by the player, the processor 11 saves the image data in the specified region in the memory 13 of the game machine. When the region in the game screen is specified, it may be roughly specified first and then trimmed. Further, the specified region may be subjected to image processing for changing resolution and correcting sharpness, brightness and the like.

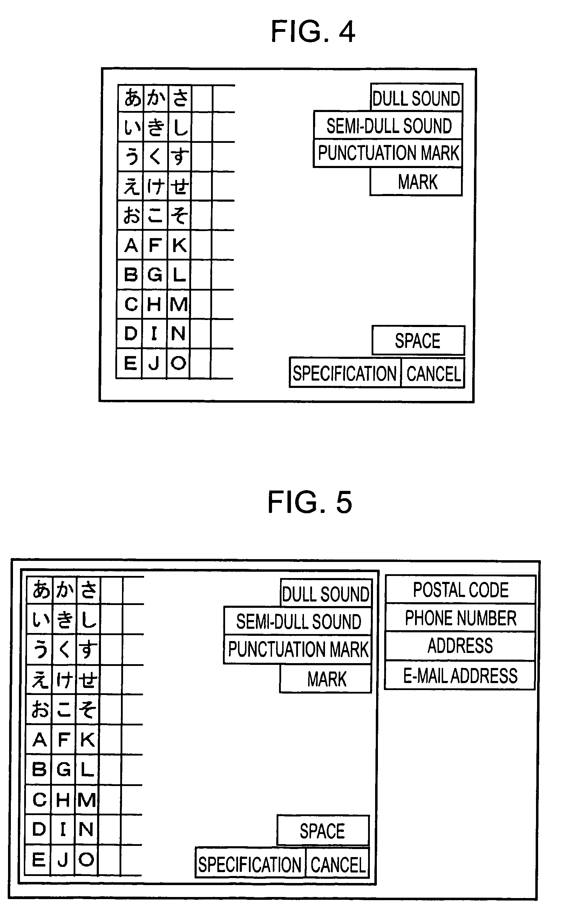

Further, when the player desires to print letter information to a printed mater, it can be input to the screen by manipulating the controller 2, and the input letter information is also saved in the memory 13 of the TV game machine. As a letter information input method a letter board as shown in Fig. 4, for example, is displayed on the monitor 3, desired letters are sequentially selected by the cross key 21 of the controller 2, the selected letters are subjected to letter conversion by the button A 24 and stored as letter information to be printed by the B button 25.

Further, the data of standard sentences and an address list, which is previously stored in the memory of the TV game, may be called to the screen by the manipulation of the controller, a desired sentence, address and the like may be selected therefrom and may be saved in the memory 13. In this case, as shown in Fig. 5, the menus of postal codes, phone numbers, addresses and names, e-main addresses, and the like, which can be read from the memory, are displayed on the monitor 3 and selected by manipulating the controller 2 by the player so that the contents of the respective menus can be displayed on the monitor 3 and desired data can be specified.

Information as to games, a mail code list, and the like may be downloaded from the Internet by the manipulation of a key of the controller, and desired information may be searched, selected, and specified therefrom.

When a print signal is input to the processor 11 by manipulating the controller 2 by the player, the processor 11 converts the image data and the letter information stored in the memory into print data suitable for a standard size card, and the print data is output to the printer connected to the TV game machine.

In this case, it is preferable that layouts of a plurality of pattern regions and sentence regions and a plurality of standard sentences be previously prepared as print forms to cards such as a postcard, a greeting card, a name card and the like, which have standard sizes, so that children as game players can simply execute a print operation by selecting a desired print form the above print forms.

After the print signal is input, the player selects whether a game is resumed or finished.

Note that it is not necessary to print a desired region immediately after it is specified from the game screen and saved or to print letter information immediately after it is input and saved, and the image data and the letter information saved in the memory later may be called and printed after the game is resumed.

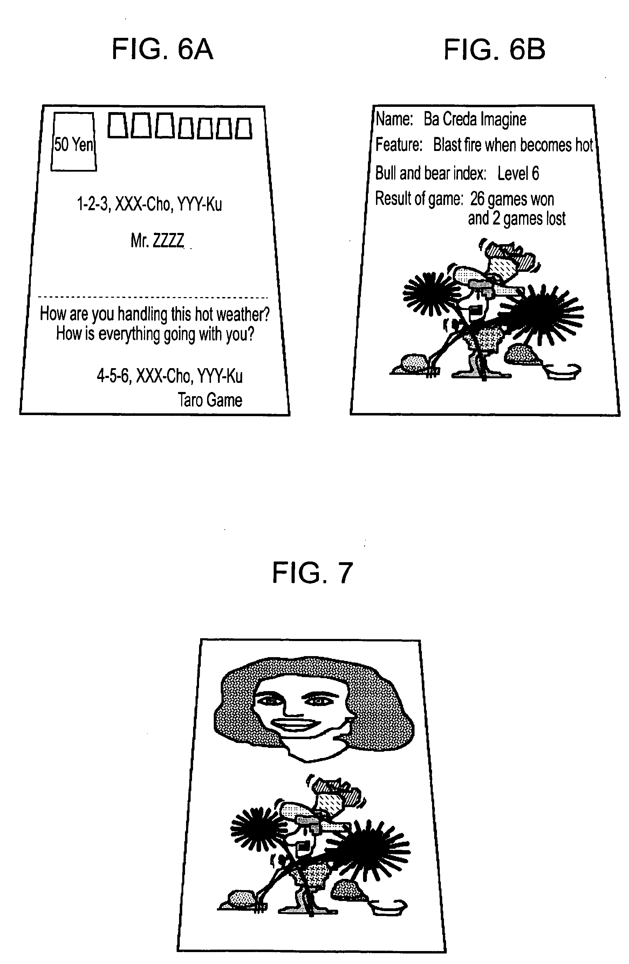

Fig. 6 shows an example of a printed matter created by the system of the present invention. The printed matter is a postcard having a back surface, on which image data saved in a game and the feature of the image data are printed, and a front surface on which the address and the name of a person to which the postcard is sent, the body of a letter, and the address and the name of a player as a sender are printed.

Further, Fig. 7 shows a postcard on which image data is printed at two positions on the back surface thereof. Note that image data to be printed may be a character in a game, a game screen, and the like saved in the memory by the method described above, and it is also possible to use image contents downloaded from the Internet and saved in the memory.

### Industrial Applicability

According to the present invention, a player can easily print a desired image in a game screen of a TV game machine on standard size cards such as a postcard, a greeting card, a name card, and the like by manipulating a controller. Further, according to a preferable embodiment of the present invention, letters and standard sentences can be also printed on the standard size card by the manipulation of the controller. Thus, according to the present invention, even children, who do not have a personal computer, can create an elaborate printed matter of high originality without using a keyboard.

## Claims

1. A computer-readable recording medium having a program recorded thereto, the program causing a computer disposed to a game machine to execute:
a function for playing a game;
a function for placing a game screen in a still state while a game is being played by the manipulation of a controller;
a function for converting the game screen into image-editable image data;
a function for selecting an arbitrary region in the game screen by actuating the controller;
a function for saving, when a region in the game screen is specified, the image data of the specified region in a memory of the game machine;
a function for converting the image data into standard size print data; and;
a function for outputting the print data to a printer connected to the game machine.

2. A computer readable recording medium according to claim 1, **characterized in that** the program further causes the computer to execute:
a function for inputting letter information to a screen by the manipulation of the controller; and
a function for saving the input letter information in the memory of the game machine, converting the letter information into standard size print data, and causing the printer to output the print data.

3. A computer readable recording medium according to claim 1, **characterized in that** the program further causes the computer to execute:
a function for calling a standard sentence or an address list previously stored in the memory of the game machine to the screen by the manipulation of the controller; and
a function for converting the standard sentence or the address list into print data to a standard size card and outputting the print data to the printer.

4. A game system **characterized by** comprising:
a computer-readable recording medium having a program recorded thereto, the program causing a computer to execute a function for playing a game, a function for placing a game screen in a still state while a game is being played by the manipulation of a controller, a function for converting the game screen into image-editable image data, a function for selecting an arbitrary region in the game screen by actuating the controller, a function for saving, when the region in the first specification is specified, the image data of the specified region in a memory of the game machine, a function for converting the image data into standard size print data, and a function for outputting the print data to a printer connected to the game machine;
read means for reading the program from the computer-readable recording medium;
a game machine comprising a computer for executing the program and the memory; and
a printer for printing print data output from the game machine.

5. A game system according to claim 4, **characterized in that** the program further causes the computer to execute:
a function for inputting letter information to a screen by the manipulation of the controller; and
a function for saving the input letter information in the memory of the game machine; and
a function for converting the letter information into a standard size print data and outputting the print data to the printer.

6. A computer readable recording medium according to claim 4, **characterized in that** the program further causes the computer to execute:
a function for calling a standard sentence or an address list previously stored in the memory of the game machine to the screen by the manipulation of the controller; and
a function for converting the data into standard size print data and outputting the print data to the printer.

7. A game machine control method **characterized by** comprising:
placing a game screen in a still status in a game machine while a game is being played by the manipulation of a controller;
converting the game screen into image-editable image data as well as selecting an arbitrary region in the game screen by the manipulation of the controller;
saving, when a region in the game screen is specified by the manipulation of the controller, the image data of the specified region in a memory of the game machine; and
converting the image data into print data to a standard size card and outputting the print data to a printer connected to the game machine.

8. A game machine control method according to claim 7, **characterized in that**:
the game machine further makes it possible to input letter information to a screen by the manipulation of the controller;
the input letter information is saved in the memory of the TV game machine; and
the letter information is converted into standard size print data and output to the printer.

9. A game machine control method according to claim 7, **characterized in that** the game machine further calls standard sentence or address list data previously stored in the memory of the game machine by manipulation of the controller, converts the data into standard size print data, and outputs the print data to the printer.

10. A game machine **characterized by** comprising:
read means for reading a program from a computer-readable recording medium having the program recorded thereto, the program causing a computer to execute a function for playing a game, a function for placing a game screen in a still state while a game is being played by the manipulation of a controller, a function for converting the game screen into image-editable image data, a function for selecting an arbitrary region in the game screen by actuating the controller, a function for saving, when the region in the first specification is specified, the image data of the specified region in a memory of the game machine, a function for converting the image data into standard size print data, a function for outputting the print data to a printer connected to the game machine, and
a computer for executing the program and the memory.
